(19) Europäisches Patentamt
European Patent Office
Office européen des brevets

(11) **EP 3 993 311 B1**

(12) **EUROPEAN PATENT SPECIFICATION**

(45) Date of publication and mention of the grant of the patent:
**28.01.2026 Bulletin 2026/05**

(21) Application number: **20204258.6**

(22) Date of filing: **28.10.2020**

(51) International Patent Classification (IPC):
**H04L 9/08** (2006.01)

(52) Cooperative Patent Classification (CPC):
**H04L 9/0852; H04L 9/088**

(54) **SYSTEM AND METHOD FOR COST-EFFICIENT AND ECONOMICAL CONSUMPTION OF KEYS IN A QUANTUM KEY DISTRIBUTION PLATFORM**

SYSTEM UND VERFAHREN ZUM KOSTENGÜNSTIGEN UND SPARSAMEN VERBRAUCH VON SCHLÜSSELN IN EINER QUANTENSCHLÜSSELVERTEILUNGSPLATTFORM

SYSTÈME ET PROCÉDÉ POUR UNE CONSOMMATION RENTABLE ET ÉCONOMIQUE DES CLÉS DANS UNE PLATE-FORME DE DISTRIBUTION DE CLÉS QUANTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.05.2022 Bulletin 2022/18**

(73) Proprietor: **Deutsche Telekom AG**
**53113 Bonn (DE)**

(72) Inventors:
• **GUNKEL, Matthias**
  **64291 Darmstadt (DE)**
• **WISSEL, Felix**
  **64372 Ober-Ramstadt (DE)**
• **SCHILD, Mike Marvin**
  **35452 Heuchelheim (DE)**

(74) Representative: **RDL Patentanwälte PartG mbB**
**Senefelderstrasse 26**
**70176 Stuttgart (DE)**

(56) References cited:
**EP-A1- 3 454 500**    **US-A1- 2014 365 774**
**US-A1- 2018 062 836**

## Description

The invention relates to a method for providing and allocating a quantum key to one of two communication sites forming a communication link (connection) within a communication network. The invention further relates to a QKD (Quantum Key Distribution) platform within a communication network, a central QKD controller for a QKD platform of a communication network and a computer program product for operating a QKD platform of a communication network.

The term "quantum cryptography" refers to the joint application of classical, symmetrical algorithms and techniques based on quantum physical laws of nature to generate a common and secret key between two communication partners, the communication partners being also called in the following Alice and Bob and are located at two different communication sites in a communication network.

US 2018/0062836 A1 refers to a communication device that includes a storage, a receiver, a storage controller, an allocator, and an encryption processor. The storage has a predetermined number of storage areas capable of storing one or more shared keys shared with a destination device. The receiver is configured to receive a shared key. The storage controller is configured to store the received shared key in any of the storage areas every time the shared key is received. The allocator is configured to allocate the storage areas to communication channels used for communicating encrypted data between the communication device and the communication destination device, based on a ratio predetermined for each communication channel. The encryption processor is configured to, according to a cryptosystem determined for the each communication channel, encrypt data and decrypt the encrypted data by using the shared key acquired from the storage area allocated to each communication channel.

For confidentiality and authenticity of messages and/or for proof of the integrity of those messages, algorithms are used which are known in the art, such as AES (Advanced Encryption Standard) or so-called One Time Pads (OTPs). For the key exchange, mathematical methods according, for example, to the DH algorithm (after W. Diffie, M. Hellmann and also R. Merkle) either in the space of positive integers or in the space of elliptic curves (DHEC - Diffie Hellman Elliptic Curve) are used.

Due to the progress in the development of quantum computers it will be increasingly likely that classical and complexity-based algorithms will no longer be used for the key exchange. A possible counter measure is the usage of quantum me-chanical procedures which deters an attacker from getting knowledge about the common secret between Alice and Bob.

In order to use the quantum mechanical features of light efficiently, it is necessary to operate with single photons or with highly damped laser pulses. Such laser pulses often have on average less than one photon within a pulse. At typical damping values within a glass fiber ($\alpha$ = 0,21 - 0,28 dB per km with $\alpha$ being the fiber damping in dB/km) the rate of the "surviving" photons decreases exponentially with the distance between Alice and Bob. Thus, the reachable key rate is also influenced, particularly limited, and at distances of about 50 km an efficiently usable key rate of several kBits/s is obtained. A known approximation for estimating the key rate R as a function of the distance L is given by the formula:

$$R(L) = R_0 \, 10^{\wedge}\left(-\frac{\alpha L}{10}\right)$$

wherein $R_0$ corresponds to the maximum achievable key rate, if the QKD sender and the QKD receiver are positioned back to back of each other, and $R_0$ is given, for example as 50 kBits/s.

In order to supply longer distances from end-to-end with quantum keys, so-called trusted nodes are used in order to realise a logical range extension of the key distribution mechanism. The trusted quantum nodes are intermediate quantum nodes between the terminal communication sites Alice and Bob. Each such trusted node has a separate QKD system which provides a respective transport key for that trusted node. It does not matter here which technology is used. A method how an end-to-end key between Alice and Bob can be generated, operates as follows: the application key to be transported from Alice to Bob for further communication is, along the distance between Alice (first terminal node) and Bob (second terminal node) at each trusted node, subjected to a bit-wise XOR operation with a transport key of a respective directly following trusted node, i.e. the distance between Alice and Bob is formed by a sequence of nodes and communication links/edges connecting these nodes wherein the application key is transferred edge by edge from Alice to Bob. The result of such bit by bit manipulation is transferred from a respective trusted node to the respective directly following trusted node in the sequence of nodes. As the XOR operation is a self-inverse mapping, the directly following trusted node is enabled, since it has knowledge of its own transport key, to reconstruct therefrom the application key to be transported in that it applies the XOR operation a second time. This procedure is repeated along the whole distance between Alice and Bob. That means that the respective transport keys are used as One-Time-Pad in order to transfer the application key in encrypted form from Alice to Bob. The respective transport keys are discarded afterwards, i.e. are not used any longer.

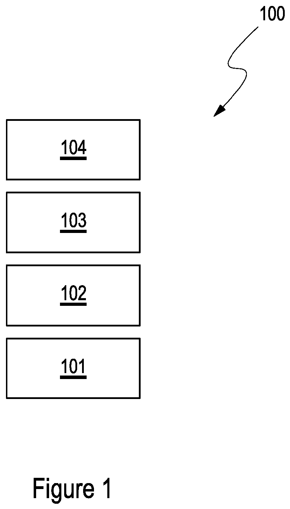

A QKD platform comprises different logical levels as schematically shown in Figure 1. The first level is formed by QKD systems, i.e. by Alice and Bob modules and all components that are relevant for generating quantum keys, such as single photon sources and single photon detectors. Such QKD systems allow only short distances between the communication sites and the key capacity is not arbitrarily increasable but underlies physical limitations. In order to compensate the need of keys of the QKD platform, the key generating QKD systems of the first level have to be, at least along some communication links/edges of the communication network, operated in parallel. It is assumed that the single QKD links, i.e. the quantum channel and the logical connections between the QKD modules necessary for the post processing, have an own (and probably manufacturer-dependent) operating system which controls the key generating process. Each of the parallel QKD links along the same communication link generates quantum keys which are independent of the others and whose characteristics depend heavily on the manufacturer, the used QKD protocol and further variables.

Above the QKD level, i.e. the first level, there is a functional second level, which is designated in the following as key store. The key store is an abstract intermediate level which is configured to keep all quantum keys per communication link available for higher administrative levels of the QKD platform. The key stores are used as quantum key aggregating interim storages, i.e. databases, which can be fed by a plurality of different QKD systems with quantum keys. Thereby, interdependencies between the platform components can be mitigated, such as manufacturer specific properties of the Alice modules and the Bob modules.

The next higher administrative level of the QKD platform is formed by local IT systems, so-called "Local Key Management Systems" (LKMS), which have control of the link-wise (edge-wise) generated quantum keys per communication site.

A still higher level of the QKD platform is formed by a hierarchical QKD controller which coordinates and orchestrates an arrangement of the spatially separated LKMS. Such function is analogue to a centralized intelligence within so-called Software Defined Networks (SDN) for classical transport networks and takes over a similar function with respect to routing decisions and optimization of paths within the communication network. The difference to conventional communication networks is that there is no optimization of end-to-end traffic relations and traffic needs between the terminal communication sites but an optimization of the distribution of quantum secure keys, herein referred to as quantum keys or only keys.

It is to be stated that a QKD system always comprises both, an Alice module and a Bob module, independently of which protocol and which technology is used. Both modules are located at different communication sites and form the end points of a communication link. The quantum keys that are generated along such communication links are pairwise present and known, after all post-processing steps, at both communication sites. This is also valid when a plurality of parallel QKD systems (for one and the same communication link) delivers quantum keys to the same key store. A synchronisation between the Alice and Bob end points is necessary so that the respective key pairs really fit together. Further an unambiguous identification of the key pairs is necessary when storing the key pairs in the key store in order to avoid confusion and problems when using the respective quantum keys.

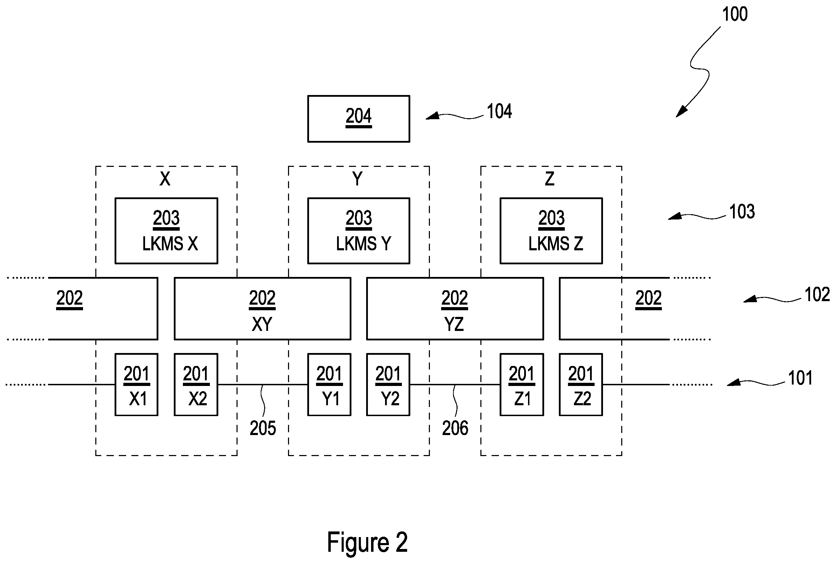

It is an object of the QKD level of the QKD platform to guarantee the synchronicity of the quantum keys as regards content, particularly that the quantum keys at the Alice site and at the Bob site which form a communication link, have pairwise the same value. Therefore, a classical post-processing of the exchanged quantum information is provided and can be realised, for example, via appropriate hash functions. It is an object of the key store that the quantum keys are imported pairwise from the QKD level and equipped with matching identifications (IDs). This object cannot be solved by the QKD level as different systems and manufacturer can operate at the QKD level. As a manufacturer has no information about domains of other manufacturer, only an hierarchically higher level takes control of the IDs and avoids collisions. For this purpose a mapping of manufacture specific numbers to globally valid identifications is necessary. It is so be stated that the QKD systems which generate the quantum keys, and the key stores which store these quantum keys in a database, are units belonging to each other in two different geographical locations. Those locations/sites form the end points, i.e. the terminals, of a topological edge within the QKD network. Regarding the key storage, the two physically separated key stores are an identical mirror of each other with respect to key values and key identifications and further key properties. This issue is further schematically illustrated in Figure 2.

The hierarchical controller, also called herein hierarchical QKD controller or only QKD controller, has no specific location. The hierarchical controller is an IT system which is hosted by a datacenter, probably distributed over several datacenter locations. All other components of the QKD platform have a fixed assignment to a communication (operating) site, also called central office. Those operating sites are designated in Figure 2 by X, Y, Z. There are individual LKMS instances at each operating site. The key stores are logically extended over two adjacent operating sites as well as the QKD systems whose Alice and Bob modules are designated in Figure 2 by their site affiliation and a respective number. The QKD systems and the key stores of operating sites X and Z lead to further not shown operating sites. Figure 2 does neither show the logical communication connections between the hierarchical controller and the LKMSs nor the classical connections among the LKMSs. A respective connection line between QKD system instances, such as an Alice module and a Bob module, that belong together forming a QKD system represents a quantum channel as well as classical communication channels which are necessary for a protocol specific post processing.

A QKD platform can comprise an arbitrary number of communication sites / operating sites and between those operating sites there can be arbitrary communication links/edges and traffic relations with specific traffic properties. This fact implies different traffic amounts and varying times when those traffic amounts have to be transported. Further, different traffic types may have different security requirements. While some traffic flows comprise confidential contents and must be completely encrypted, it may be sufficient with other traffic flows if the identity between sender and receiver is identified in a clear and tamper-proof manner. A typical encryption by means of AES-256 needs a shared secret of 256 bit which is to be renewed in regular intervals depending on the traffic amount to be encrypted. The requirements for key lengths for a pure authentication are generally much lower. A complex pattern of traffic needs and, therefore, of net key needs between the operating sites results from all the requirements of the users connected to the QKD platform. It is important to differentiate between global key needs and net key needs as the keys of the terminals of a communication link which, because of its length, is divided into a number of shorter communication links/edges with their respective end points (intermediate nodes) have firstly to be transported from one terminal to the other terminal of the communication link by means of edge-wise generated transport keys. For this purpose a real random bit sequence is generated at one of the terminal sites. Such random bit sequence forms the application key and is transported by means of transport keys which have been quantum securely generated via the One-Time-Pad method per communication link, to the desired respective other terminal site. The transport keys may also be designated as transmission keys and are only valid between adjacent LKMS sites, i.e. adjacent operating sites and are used as OTP keys for distributing the end-to-end application keys.

The hierarchical QKD controller is responsible for selection of the communication links and communication sites (operating sites) that must be passed between the two terminals. The respective application notifies the QKD controller of its respective key requirements in terms of desired key length and remote terminal, i.e. remote receiver and probably of further not essentially necessary additional information, as, for example, required epsilon security of the underlying QKD protocols or a priority for the case that a capacity bottleneck occurs. Further side conditions are possible such that along the route (communication path) to the remote terminal no QKD systems of a specific manufacturer are allowed or that a specific intermediate operating site must be involved or must be explicitly excluded. Here, the IT systems, i.e. the LKMS which are responsible for generating, distributing and management of the transport keys and the application keys, are of high relevance. At each operating site, there is exactly one LKMS instance with a platform-wide unambiguous identification (ID).

The application requesting an application key, contacts its local LKMS with the LKMS-ID of the desired communication partner, i.e. the remote terminal. The LKMS-ID of the desired remote communication partner is communicated in a respective protocol due to an original contact. The local LKMS forwards such request of the application to the hierarchical QKD controller. The hierarchical QKD controller calculates an optimal communication path between the two terminals through the communication network on the basis of a current network workload and by taking into account possible side conditions. The QKD controller uses here a so-called Path Computing Engine (PCE). For the hierarchical QKD controller to fulfil its function, the QKD controller is permanently provided with current capacity information from the key stores. This capacity information comprises a currently reachable key generating rate and information about available keys that have not yet been used. After calculating the optimal communication path for the current key request a result in terms of a sequence of LKMSs that are to be passed, is transmitted to the originally requesting LKMS. The result is a sequence of platform-wide unambiguous LKMS-IDs. Until the last operating site is reached, each LKMS at each intermediate operating site executes iteratively a same order of processing steps: first, the following target-LKMS-ID is retrieved from the sequence of LKMS-IDs and deleted from the sequence of LKMS-IDs. By means of the retrieved target-LKMS-ID the appropriate key store is selected which comprises the transport keys of the counter site (of the current communication link). Transmission keys matching the key request are requested from the local key store, i.e. from the key store which is assigned to the respective operating site. Thereby, it is possible that a plurality of transmission keys is retrieved and used in order to reach the desired length of the application key. Then the application key is coupled with the retrieved transmission keys via an XOR operation and forwarded together with further meta information according to the calculated sequence of LKMS-IDs to the following adjacent LKMS. The meta information comprises the remaining LKMS-IDs of the calculated sequence, desired key properties which are used for selecting appropriate transmission keys and the IDs of the currently used transmission keys. The receiving LKMS uses these IDs for selecting the appropriate key values on its side of the key store (which is logically shared between the two adjacent operating sites, i.e. the adjacent LKMS). The receiving LKMS decrypts the application key and uses the further meta information for determining the next intermediate LKMS along the communication path to the receiver terminal (remote terminal), i.e. the destination location. The last step is omitted when the desired target-LKMS is reached at the destination location. Then, the application key is put at the disposal of the remote terminal. In order not to endanger basic security of the keys, the real key values must not leave the secure environment of the operating sites. This means that the hierarchical QKD controller is operating exclusively with abstracted data and information, e.g. with the fill level of the key stores, possibly differentiated into different classes of keys. For calculating the optimal communication path, this aggregated information is sufficient. One aspect when calculating the optimal communication path is, however, that the side conditions and the environment variables can change and can be dependent on changes at remote operating sites within the network.

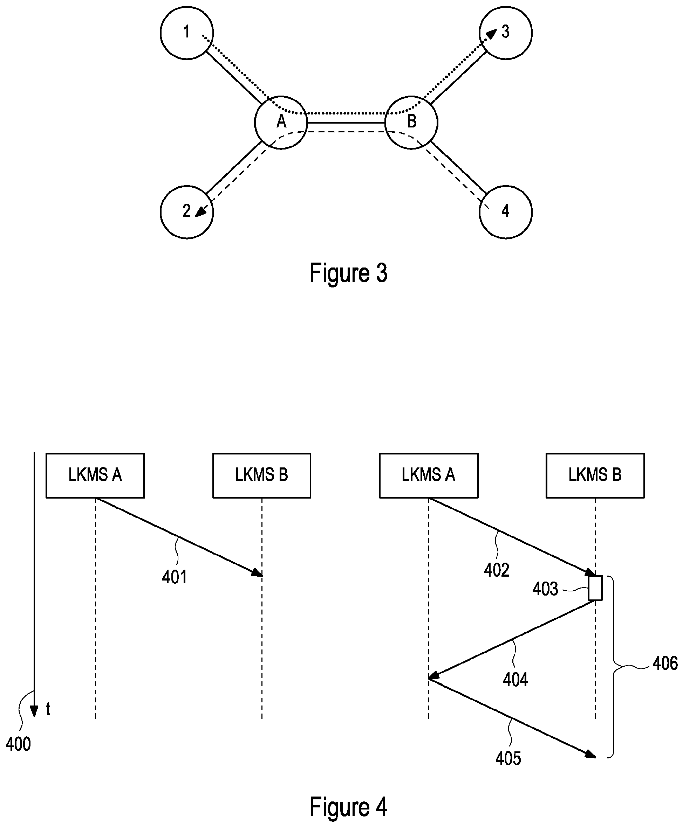

When considering a more complex network topology, as shown schematically in Figure 3, some problems arise which is dealt with in the following. The circles designate operating sites, applications as well as network elements of a QKD platform. The solid black lines represent fibre connections. The operating sites 1 to 4 and A and B are to be understood as part of a bigger topology. To illustrate the problem, it is assumed below that there is a key request from operating site 1 to operating site 3 and a key request from operating site 4 to operating site 2. The request from operating site 1 to operating site 3 is indicated by a dotted line, the request from operating site 4 to operating site 2 is indicated by a broken line. It is to be recognized that this results in two opposing key relations along the communication link / edge A - B. For the request from operating site 1 to operating site 3, transport keys from the key store for direction $A \rightarrow B$ have to be used and for the request from operating site 4 to operating site 2 transport keys from the same key store for direction $B \rightarrow A$ have to be used. This results in the following problem: The determination/calculation of the optimized communication paths by the hierarchical QKD controller is performed asynchronously to the execution of the concrete key routing. It can be assumed that the actual calculation will only take a relatively short time and that the calculated LKMS sequence can be passed on to the requesting LKMS relatively quickly. Then, the hierarchical QKD controller can immediately process the next key request while the steps described above take place on the level of the LKMS and the key stores, i.e. on the second level. Since in principle any kind of communication path within the QKD network can be used and any kind of end points within the QKD network can be connected, also operating sites far away from each other, no statement can be made about how long the process will take. Further, it may be the case that due to a current global situation within the QKD network, not the geographical shortest communication path is selected but a communication path which is a diversion, but which is better because of the available key resources.

Therefore, it cannot be excluded that the respective LKMS at the operating sites A and B access their endpoint to the joint key store quasi simultaneously, thereby causing a collision with respect to the key material. That means that the same transport keys are used once in one direction and once in the other direction. Thus, a massive security gap is created since a One-Time-Pad is used twice, which must not be the case under any circumstances. Therefore, all keys should be immediately marked as consumed and thus blocked as soon as they are queried. However, this information has to be exchanged between the end (access) points of the key store. This takes at least three times the time required for a normal key transmission because instead of directly selecting a transmission key and forwarding the respective application key with this selected transmission key, the LKMS of operating site A would first have to declare which transmission key it wants to use, i.e. it must make a reservation request, which is then checked and answered by the LKMS of operating site B. In the best case there is no collision and the LKMS of operating site B can immediately mark the desired keys on its premises as reserved and give a positive feedback to the LKMS of operating site A before the actual distribution of keys is started. A less favourable outcome, however, requires further exchange of information to resolve the conflict. Such conflict is illustrated in Figure 4 for better understanding. It is no option to discard the colliding keys since the quantum keys are a much too precious resource. This extra work is a major hindrance in the course of the whole key provision and distribution, as this additional step must be carried out continuously and between all the LKMS and key stores involved.

Therefore, it is an object of the present invention to select a transmission key only on the basis of locally available information, to avoid or reduce additional information exchange between LKMSs involved, to prevent the need to generate and maintain real-time information and, therefore, to allow an efficient and fast distribution of application keys within a QKD network.

The above-mentioned objects are solved by the method and the system with the features of the respective independent claims. Further embodiments are presented by the following description and the respective dependent claims.

One aspect of the invention is a method for providing and allocating a quantum key to one of two communication sites forming a communication link (connection) within a communication (QKD) network, wherein at least one key store is used as quantum key aggregating interim storage, wherein each quantum key stored in a respective key store is directly or indirectly linked with a communication direction attribute which indicates / defines for which of two possible directions of a communication between the two communication sites the respective quantum key is to be used whereby the respective quantum key is allocated to and retrievable (accessible) by the one of the two communication sites which acts as sender in a respective communication.

Each of the quantum keys which are generated by respective QKD systems located at respective communication sites and stored in respective key stores which are shared by two adjacent communication sites, is directly or indirectly linked to a communication direction attribute so that the respective quantum key can only be used for the unique communication direction as indicated by the assigned communication direction attribute. This approach avoids a double-sided access to the same quantum keys within a respective key store at approximately the same time.

In one embodiment of the proposed method, a simple convention is implemented as a general rule in the at least one key store: each quantum key stored in the respective key store is assigned a respective key ID, wherein the communication direction attribute is coded in the respective key ID and is obtained by numerical evaluation of the key ID. In the simplest case, all quantum keys with an even key ID, respectively, are allocated to one of the two communication sites and all quantum keys with an odd key ID, respectively, are allocated to the corresponding other one of the two communication sites. That means that a LKMS at one side of a communication link gets all even key IDs and the other side (opposite side) of the respective communication link gets all odd key IDs assigned. The division into even and odd refers to the key IDs, not to the key values. In this way, collisions during key requesting can be avoided via a simple half and half division of the key material stored in a key store used and accessible by the two neighboring communication sites.

However, this approach does not consider the fact that the need for keys is not equally distributed along all communication links, i.e. QKD edges, and all pairs of LKMSs at adjacent operating sites, but rather arbitrary distributed. Further, it is to be stated that the distribution of the keys on the two directions of the same communication link/edge is not always constant but due to the dynamic of the needs also fluctuates over time.

To take this into account, the keys should be divided into the two communication directions of a communication link between two adjacent communication sites as soon as they are imported from the underlying key generating QKD systems into the respective key stores.

According to one possible embodiment of the proposed method, this can be achieved by providing for each communication direction of the two possible communication directions a respective key store into which the quantum keys which are to be allocated to the respective communication direction and, thus, to the corresponding communication site acting as sender, are stored after importation from a respective key generating QKD system. That means that there is not only one shared key store for two adjacent operating sites, and thus for the two adjacent LKMS of the respective adjacent operating sites but two key stores, one for each communication direction.

Alternatively, weights, particularly in the form of percentage values, are given by which the quantum keys which are to be imported from respective QKD systems, are statically distributed between the two possible communication directions and allocated to the respective corresponding communication sites accordingly. This embodiment is better adapted to the general situation.

According to one embodiment, the weights are provided by the QKD controller which has an overview of all requests for quantum keys within the communication network, i.e. the QKD network and, therefore, adjusts the weights to a current or prospective need of respective quantum keys for a respective communication direction. The weights are set by the hierarchical QKD controller, which has an overview of all (and historical) needs/requests for keys and, therefore, can adapt and possibly even plan ahead the weights to the daily course of the needs/requests for keys.

In a further embodiment of the proposed method, a machine learning system is implemented and used by the QKD controller to determine the prospective need of respective quantum keys for a respective communication direction, wherein the machine learning system logs occurring requests for quantum keys within the communication network (i.e. QKD network) and uses the occurring requests as training data for autonomous learning. In this case the distribution of the keys is dynamic. The machine learning algorithm may be implemented within the QKD controller but it is at least in operative connection with the QKD controller. The machine learning algorithm records the occurring requests and thus has a constant flow of current data at its disposal. Combinations of SDN (software defined networking) and AI systems based on so-called deep learning may be used here.

When starting the QKD platform, it may be useful to operate with static weights and to observe the global system for a while so that the machine learning mechanism, i.e. the machine learning system has sufficient opportunity to train itself. The machine learning mechanism can access continuously more and more data. Over time, longer term patterns with long range temporary correlations become visible. However, it is useful to provide a correction and control mechanism. Such correction and control mechanism may be implemented and used to guarantee that the weights are always above a given threshold value, respectively, to ensure that an edge, i.e. a communication link has always a reserve of keys.

According to a further embodiment, a local key management system, i.e. a LKMS which is located at a communication site, is authorized to adjust the weights to the current need of respective quantum keys for a respective communication direction dynamically, to a limited extent also in contradiction to (in conflict with) the adjustment made by the QKD controller. The LKMS can, unlike the QKD controller, respond almost in real time to occurring requests. However, according to a further embodiment, this approach should only be used in emergency situations, for example when the link between the hierarchical QKD controller and the LKMS is limited. In such a case, it is also possible to provide that the allocation of the generated keys falls back into a pre-defined standard relation.

According to still a further embodiment, the determination and the adjustment of the weights by the QDK controller is made offline, i.e. independently from a current communication between the two communication sites. Otherwise, the time advantage over the other solution which requires additional communication between the LKMSs, would be lost, because of the runtime of the signals only, since the LKMSs are by definition nearest neighbours while the QKD controller is located multi-site.

According to a further embodiment, the method is used for providing and allocating a transmission key to one of two neighboring communication sites within the communication network wherein the transmission key is only valid for the communication between the two neighboring communication sites and used as OTP key for distributing an end-to-end application key between respective terminal sites.

Another aspect of the invention is a system which is in operative connection with or integrated in a QKD platform within a communication network, wherein the system comprises at least a computing device and the QKD platform comprises at least:

- at least one key store as quantum key aggregating interim storage,
- at least two communication sites, each communication site comprising at least one QKD system instance and a local key management system, LKMS, each QKD system instance having a counterpart at another communication site of the at least two communication sites, thus forming a QKD system which is configured to generate quantum keys for a communication between the respective two communication sites and to store the generated quantum keys in a key store of the at least one key store that is assigned to the respective two communication sites, and
- a hierarchical QKD controller,

wherein the at least one computing device is in an operative connection with the at least one key store and the at least two communication sites and is designed to configure the QKD platform to execute the method as proposed and described herein.

According to a third aspect, the invention refers to a QKD platform within a communication network, wherein the QKD platform comprises at least:

- at least one key store as quantum key aggregating interim storage,
- at least two communication sites, each communication site comprising at least one QKD system instance and a local key management system, LKMS, each QKD system instance having a counterpart at another communication site of the at least two communication sites, thus forming a QKD system which is configured to generate quantum keys for a communication between the respective two communication sites and to store the generated quantum keys in a key store of the at least one key store that is assigned to the respective two communication sites,
- a hierarchical QKD controller, and
- at least one computing device,

wherein the at least one computing device is in an operative connection with the at least one key store and the at least two communication sites and is designed to configure the QKD platform to execute the method as proposed and described herein.

A fourth aspect of the invention is a hierarchical QKD controller for a QKD platform of a communication network, the hierarchical QKD controller having an overview of all requests for quantum keys within the communication network and being configured for determining weights, particularly in the form of percentage values, by which quantum keys are statically distributed between two possible communication directions of a communication between two adjacent communication sites and allocated to the respective corresponding communication sites accordingly within the communication network, and adjusting the weights to a current or prospective need of respective quantum keys for a respective communication direction.

According to one embodiment, the hierarchical QKD controller is in operative connection with a machine learning system and configured to use the machine learning system for determining the prospective need of respective quantum keys for a respective communication direction, wherein the machine learning system logs occurring requests for a quantum key within the communication network and uses the occurring requests as training data for autonomous learning.

The hierarchical QKD controller is configured to be used in the QKD platform as described above.

A fifth aspect of the invention is a computer program product for operating a QKD platform of a communication network, comprising a storage medium storing a program code, the program code causing the QKD platform to carry out a method according to the invention and as described above when being executed by at least one computing device, such as a processor which is in operative connection with the QKD platform.

Shortly summarized, advantages of the invention are at least the following:

- collisions of transmission keys are avoided and the security of the QKD platform is increased,
- an efficient and resource-saving usage of quantum keys is achieved,
- there is no delay in comparison with the solution which requires additional communication between adjacent LKMSs,
- there is no negative temporal impact on the actual key distribution,
- all calculations which are necessary for the optimization are executed offline, especially not at the runtime of the key provising,
- all necessary adjustments may be implemented without side effects into the QKD platform,
- the method according to the invention does not require additional hardware,
- the QKD platform may be used in a static and configurable manner which underlies the full control by a network administrator,

- the method according to the invention may be executed in a highly automated manner,
- the self learning mechanism as used by the proposed method can react actively to spontaneous disturbances.

Further advantages and configurations of the invention become apparent from the following description and the enclosed drawings.

It shall be understood that the features described previously and to be described subsequently may be used not only in the indicated combinations but also in different combinations or on their own without leaving the scope of the present invention.

The invention is described in detail by means of an exemplary embodiment and with reference to the drawings.

Fig. 1 schematically shows a block diagram of hierarchical levels of a QKD platform in which an embodiment of the claimed method can be executed;

Fig. 2 schematically shows a block diagram of the hierarchical levels of the QKD platform of Figure 1 in more detail;

Fig. 3 schematically shows a possible scenario which illustrates the problem underlying the present invention and illustrates a possible key distribution in a QKD platform according to the invention.

Fig. 4 illustrates an arising conflict in the state of the art when the respective LKMSs at the operating sites A and B access their endpoint to the joint key store quasi simultaneously.

Figure 1 schematically shows a possible embodiment of a QKD platform as claimed herein and as usable for executing an embodiment of the method as claimed herein. The QKD platform 100 comprises different logical levels. The first level 101 is formed by QKD systems, i.e. by Alice and Bob modules and all components that are relevant for generating quantum keys, such as single photon sources and detectors. Such QKD systems allow only short distances between the communication sites and the key capacity is not arbitrarily increasable but underlies physical limitations. In order to compensate the need of quantum keys of the QKD platform 100, the key generating QKD systems of the first layer 101 must be, at least along some communication links of the communication network, operated in parallel. It is assumed that the single QKD links, i.e. the quantum channel and the logical connections between the QKD modules necessary for the post processing, have an own (and probably manufacturer-dependent) operating system which controls the key generating process. Each of the parallel QKD links along the same communication link generates quantum keys which are independent of the others and whose characteristics depend heavily on the manufacturer, the used QKD protocol and further variables.

Above the QKD level, i.e. the first level 101, there is a functional second level 102, which is designated in the following as key stores. The key stores 102 form an abstract intermediate level which is configured to keep all quantum keys per communication link available for higher administrative levels. The key stores 102 are used as quantum key aggregating interim storages, i.e. databases, which can be fed by a plurality of different QKD systems with quantum keys. Thereby, interdependencies between the platform components can be mitigated, such as manufacturer specific properties of the Alice and Bob modules.

The next higher administrative level 103 is formed by local IT systems, so-called "Local Key Management Systems" (LKMS), which have control of the edge-wise generated quantum keys per communication site.

A still higher level 104 is formed by a hierarchical QKD controller, herein also called hierarchical controller or QKD controller, which coordinates and orchestrates an arrangement of the spatially separated LKMS. Such function is analogue to a centralized intelligence within so-called Software Defined Networks (SDN) for classical transport networks and takes over a similar function with respect to routing decisions and optimization of communication paths within the communication network. The difference to conventional communication networks is that there is no optimization of end-to-end traffic relations and traffic needs between the communication sites but an optimization of the distribution of quantum secure keys, herein referred to as quantum keys.

Figure 2 schematically shows the QKD platform 100 in more detail and a geographical distribution of the different components of the different levels 101, 102, 103 and 104. It is an object of the QKD level 101 to guarantee a synchronicity of the quantum keys as regards content, particularly that the quantum keys at the Alice site and at the Bob site which are assigned to each other have pairwise the same value. Therefore, a classical post-processing of the exchanged quantum information is provided and can be realised, for example, via appropriate hash functions. It is an object of the key store 102 that the quantum keys are imported pairwise from the QKD level 101 and equipped with matching identifications (IDs). This object cannot be solved by the QKD level 101 as different systems and manufacturer can operate at the QKD level 101. As a manufacturer has no information about domains of other manufacturers, only a hierarchically higher level takes control of the IDs and avoids collisions. For this purpose a matching of manufacture specific numbers to globally valid identifications is necessary. It is so be stated that the QKD systems of the first level 101, which generate the quantum keys, and the key stores of the second level 102, which store these quantum keys in a database, are units belonging together in two different geographical locations. Figure 2 shows three different operating sites, an operating site X, an operating site Y and an operating site Z. Each operating site X, Y, Z is indicated by a respective frame of dotted lines. The key stores 202 are logically extended over two adjacent operating sites as well as the QKD systems 201 whose Alice and Bob modules are designated in Figure 2 by their site affiliation and a respective number. For each QKD system 201, for example, the Bob module is designated by "1" and the Alice module is designated by "2" such that the Alice module of the QKD system at operating site X is designated as QKD system instance X2 and the corresponding Bob module of the QKD system at operating site Y is designated as QKD system instance Y1. At operating site X there are located two instances of two QKD systems, QKD system instance X1 and QKD system instance X2, at operating site Y, there are located two QKD system instances, QKD system instance Y1 and QKD system instance Y2 and at operating site Z, there are located two QKD system instances, QKD system instance Z1 and QKD system instance Z2. Those locations/operating sites X, Y, Z form end points, i.e. the terminals, of a topological edge within a QKD network. Regarding the key storage, the two physically separated key store endpoints are an identical mirror of each other with respect to key values and key identifications and further key properties. The key store which is assigned to the communication link 205 between the QKD system instance X2 at the operating site X and the QKD system instance Y1 at the operating site Y is shown as one inter-site key store XY. The key store which is assigned to the communication link 206 between the QKD system instance Y2 at the operating site Y and the QKD system instance Z1 at the operating site Z is shown as one inter-site key store YZ. Each of the communication links 205 and 206 between QKD system instances belonging together, i.e. between QKD system instance X2 and QKD system instance Y1, and between QKD system instance Y2 and QKD system instance Z1, represents a respective quantum channel as well as classical communication channels which are necessary for a protocol specific post processing.

The hierarchical QKD controller 204 has no specific location. The hierarchical QKD controller 204 is an IT system which is hosted by a datacenter, probably distributed over several datacenter locations. All other components of the QKD platform 100 have a fixed assignment to a communication (operating) site. Those operating sites are designated in Figure 2 by X, Y, Z. There are individual LKMS instances 203 at each operating site X, Y, Z, namely LKMS X at operating site X, LKMS Y at operating site Y and LKMS Z at operating site Z. The QKD systems and the key stores of operating sites X and Z lead to further operating sites which are not shown. Figure 2 does neither show the logical communication connections between the hierarchical controller 204 and the LKMS 203 nor the classical connections among the LKMS 203. A respective connection line 205, 206 between QKD system instances that belong together represents a quantum channel as well as classical communication channels which are necessary for a protocol specific post processing.

When considering a more complex network topology, as shown schematically in Figure 3, some problems arise which are solved by the method, the system and the QKD platform of the invention. The circles designate operating sites, applications as well as network elements of the QKD platform. The solid black lines represent fibre connections. The operating sites 1 to 4 and A and B are to be understood as part of a bigger topology. To illustrate the problem, it is assumed below that there is a key request from operating site 1 to operating site 3 and a key request from operating site 4 to operating site 2. The request from operating site 1 to operating site 3 is indicated by a dotted line, the request from operating site 4 to operating site 2 is indicated by a broken line. It is to be recognized that this results in two opposing key relations along the communication link, i.e. the edge A - B. For the request from operating site 1 to operating site 3, transport keys from the key store for direction A → B have to be used and for the request from operating site 4 to operating site 2 transport keys from the same key store for direction B → A have to be used. This results in the following problem: The determination/calculation of the optimized communication paths is performed by the QKD controller 204 asynchronously to the execution of the concrete key routing. It can be assumed that the actual calculation will only take a relatively short time and that a calculated LKMS sequence can be passed on to the requesting LKMS 203 relatively quickly. Then, the hierarchical QKD controller 204 of the QKD platform 100 can immediately process the next key request while the steps described above take place on the level 103 of the LKMS 203 and the level 102 of the key stores 202. Since in principle any kind of communication path within the QKD network can be used and any kind of end points within the QKD network can be connected, also operating sites far away from each other, no statement can be made about how long the process will take. Further it may be the case that due to a current global situation within the QKD network not the geographical shortest communication path between two operating sites is selected but a communication path which is a diversion, but which is better because of the available key resources.

Therefore, it cannot be excluded that the respective LKMS 203 at the operating sites A and B access their endpoint to the joint key store 202 quasi simultaneously, thereby, without using the inventive concept, causing a collision with respect to the key material. That means that the same transport keys are used once in one direction and once in the other, opposite direction. Thus, a massive security gap is created since a One-Time-Pad is used twice, which must not be the case under any circumstances. Therefore, all keys should be immediately marked as consumed and thus blocked as soon as they are queried. However, this information must be exchanged between the end (access) points of the key store 202. This takes at least three times the time required for a normal key transmission because instead of directly selecting a transmission key and forwarding the respective application key with this selected transmission key, the LKMS of operating site A would first have to declare which transmission key it wants to use, i.e. quasi make a reservation request, which is then checked and answered by the LKMS of operating site B. In the best case there is no collision and the LKMS of operating site B can immediately mark the desired keys on its premises as reserved and give a positive feedback to the LKMS of operating site A before the actual distribution of keys is started. A less favourable outcome, however, requires further exchange of information to resolve the conflict. It is no option to discard the colliding keys since the quantum keys are a much too precious resource. This extra work is a major hindrance in the course of the whole key provision and distribution, as this additional step must be carried out continuously and between all the LKMS and key stores involved.

According to the inventive concept, i.e. the method according to the invention, each quantum key stored in a respective key store 202 is directly or indirectly linked with a communication direction attribute which indicates / defines for which of the two possible directions of the communication between the two communication sites A and B, the respective quantum key is to be used whereby the respective quantum key is allocated to and retrievable from the one of the two communication sites which acts as sender in a respective communication. That means that the LKMS 203 of operating site A can only retrieve those quantum keys of the key store 202 which are unambiguously assigned to operating site A by a respective communication direction attribute and the LKMS 203 of operating site B can only retrieve those quantum keys of the key store which are unambiguously assigned to operating site B by a respective communication direction attribute. That means that all quantum keys assigned to operating site A can be retrieved by the LKMS 203 of operating site A whenever the LKMS 203 of operating site A acts as sender and all quantum keys assigned to operating site B can be retrieved by the LKMS 203 of operating site B whenever the LKMS 203 of operating site B acts as sender. Such communication direction attribute can be realised by a key property which may be coded in key material, such as the respective key ID. For example, it may apply that each quantum key with an even key ID is assigned to one communication direction of a communication between two communication sites and each quantum key with an odd key ID is assigned to the respective other communication direction between the respective two communication sites. Any other key material property can be used to allocate a quantum key to one of the two communication directions.

Further, it is possible to provide specific key stores, each key store being assigned to a designated communication direction and each quantum key which is stored in the respective key store can only be used for that designated communication direction. Quantitative allocation of respective quantum keys to a specific communication direction can be static, according to predefined fixed rules, or dynamic, adapted to a current situation.

Figure 4 illustrates the arising conflict in the state of the art when the respective LKMSs at the operating sites A and B, i.e. LKMS A and LKMS B access their endpoint to the joint key store quasi simultaneously, thereby causing a collision with respect to the key material. That means that the same transport keys run the risk of being used twice, once in one direction and once in the other direction of the communication link between operating site A and operating site B. Thus, a massive security gap would be created since a One-Time-Pad is used twice, which must not be the case under any circumstances. Therefore, all keys should be immediately marked as consumed and thus blocked as soon as they are queried. However, this information must be exchanged between the end (access) points of the joint key store, i.e. between the LKMS A at operating site A and the LKMS B at operating site B. Figure 4 illustrates a chronological sequence of an availability check to be performed before an application key can be forwarded from LKMS A to LKMS B. The time is plotted on a vertical axis 400. The left section of Figure 4 shows a direct forwarding as indicated by arrow 401, the right section shows a forwarding with availability check. Such forwarding with availability check takes at least three times the time required for a normal key transmission because instead of directly selecting a transmission key and forwarding the respective application key with this selected transmission key, the LKMS A of operating site A would first have to announce, as indicated by arrow 402, which transmission key it wants to use, i.e. it must make a reservation request by signalling an ID of the selected transmission key. This reservation request is then checked in an examination process 403 and answered by the LKMS B of operating site B. In the best case there is no collision and the LKMS B of operating site B can immediately mark the desired keys on its premises as reserved and give a positive feedback, as indicated by arrow 404, to the LKMS A of operating site A before the actual distribution of keys is started as indicated by arrow 405. A less favourable outcome, however, requires further exchange of information, as indicated by curly bracket 406, to resolve the conflict. It is no option to discard the colliding keys since the quantum keys are a much too precious resource. This extra work can be avoided by the present invention as explained above. According to the invention the transmission keys are already identified with regard to its direction of use before a potential conflict arises.

The scope of the invention is defined by the independent claims as appended. Further embodiments are defined in the dependent claims.

**Reference Numerals**

| | |
|---|---|
| 100 | QKD platform |
| 101 | first level |
| 102 | second level |
| 103 | third level |
| 104 | fourth level |
| 201 | QKD system |
| 202 | key store |
| 203 | LKMS |
| 204 | hierarchical QKD controller |
| 205 | communication link |
| 206 | communication link |
| 400 | time axis |
| 401 | arrow |
| 402 | arrow |
| 403 | examination process |
| 404 | arrow |
| 405 | arrow |
| 406 | curly bracket |
| 1 | communication site, operating site |
| 2 | communication site, operating site |
| 3 | communication site, operating site |
| 4 | communication site, operating site |
| A | communication site, operating site |
| B | communication site, operating site |
| X | communication site, operating site |
| Y | communication site, operating site |
| Z | communication site, operating site |

**Claims**

1. A method for providing and allocating a quantum key as transport key to one of two adjacent communication sites (A, B, X, Y, Z) forming a communication link within a communication network and being intermediate quantum nodes between a first terminal communication site and a second terminal communication site, wherein the transport key is used as One-Time-Pad, OTP, in order to transfer an application key in encrypted form from the first terminal communication site to the second terminal communication site wherein at least one key store (202) is used as quantum key aggregating interim storage, is shared by the two adjacent communication sites, wherein the at least one key store (202) is part of an abstract intermediate level (102 between a QKD level (101) with QKD systems which generate quantum keys and which are located at respective communication sites, and an administrative level (103) formed by local key management systems, LKMS, of respective communication sites, and is accessible by respective LKMS of the two adjacent communication sites quasi simultaneously, wherein each quantum key stored in a respective key store (202) is directly or indirectly linked with a communication direction attribute which is realised by a key property coded in key material and indicates for which of two possible directions of a communication between the two adjacent communication sites (A, B, X, Y, Z) the respective quantum key is to be used whereby the respective quantum key is unambiguously allocated to one of the two adjacent communication sites (A, B, X, Y, Z) and can be retrieved by a respective LKMS of said communication site whenever said communication site acts as sender in a respective communication so that the respective quantum key can only be used for the unique communication direction as indicated by the assigned communication direction attribute, thus, avoiding a double-sided access to the same quantum keys within a respective key store at approximately the same time.

2. The method according to claim 1, wherein each quantum key stored in the key store (202) is assigned a respective key ID, wherein the communication direction attribute is coded in the respective key ID and is obtained by numerical evaluation of the key ID.

3. The method according to claim 2, wherein all quantum keys with an even key ID, respectively, are allocated to one of the two communication sites (A, B, X, Y, Z) and all quantum keys with an odd key ID, respectively, are allocated to the corresponding other one of the two communication sites (A, B, X, Y, Z).

4. The method according to one of claims 1 to 3, wherein for each communication direction of the two possible communication directions a key store (202) is provided, into which the quantum keys which are to be allocated to the respective communication direction and, thus, to the corresponding communication site (A, B, X, Y, Z) acting as sender, are stored after importation from a respective key generating QKD system (201).

5. The method according to any one of claims 1 to 4 wherein weights, particularly in the form of percentage values, are given by which the quantum keys are statically distributed between the two possible communication directions and allocated to the respective corresponding communication sites (A, B, X, Y, Z) accordingly.

6. The method according to claim 5, wherein the weights are provided by a QKD controller (204) which has an overview of all requests for a quantum key within the communication network and therefore adjusts the weights to a current or prospective need of respective quantum keys for a respective communication direction.

7. The method according to claim 6, wherein a machine learning system is implemented and used by the QKD controller (204) to determine the prospective need of respective quantum keys for a respective communication direction, wherein the machine learning system logs occurring requests for a quantum key within the communication network and uses the occurring requests as training data for autonomous learning.

8. The method according to claim 6 or 7, wherein a control mechanism is implemented and used to guarantee that the weights are always above a given threshold value, respectively.

9. The method according to any one of claims 6 to 8 wherein a local key management system (203) which is located at a communication site (A, B, X, Y, Z), is authorized to adjust the weights to the current need of respective quantum keys for a respective communication direction dynamically, to a limited extent also in contradiction to the adjustment made by the QKD controller (204).

10. The method according to any one of claims 6 to 9 wherein the determination and the adjustment of the weights by the QDK controller (204) is made offline, i.e. independently from a current communication between the two communication sites (A, B, X, Y, Z).

11. The method according to any one of the preceding claims which is used for providing and allocating a transmission key to one of two neighboring communication sites (A, B, X, Y, Z) within the communication network wherein the transmission key is only valid for the communication between the two neighboring communication sites (A, B, X, Y, Z) and used as OTP key for distributing an end-to-end application key between respective terminal sites.

12. A system in operative connection with or integrated in a QKD platform within a communication network, wherein the system comprises at least a computing device and the QKD platform comprises at least:

   - at least one key store (202) as quantum key aggregating interim storage,
   - at least two adjacent communication sites (A, B, X, Y, Z), each communication site (A, B, X, Y, Z) comprising at least one QKD system instance and a local key management system, LKMS, (203), each QKD system instance having a counterpart at another adjacent communication site (A, B, X, Y, Z) of the at least two adjacent communication sites (A, B, X, Y, Z), thus forming a QKD system which is configured to generate quantum keys for a communication between the respective two adjacent communication sites (A, B, X, Y, Z) and to store the generated quantum keys in a key store (202) of the at least one key store (202) that is assigned to and shared by the respective two adjacent communication sites (A, B, X, Y, Z), wherein the at least one key store (202) is part of an abstract intermediate level (102) between a QKD level (101) with QKD systems of respective communication sites and an administrative level (103) formed by local key management systems, LKMS, of respective communication sites, and is accessible by respective LKMS of the two adjacent communication sites quasi simultaneously and
   - a hierarchical QKD controller (204),

wherein the at least one computing device of the system is in an operative connection with the at least one key store (202) and the at least two adjacent communication sites (A, B, X, Y, Z) and is designed to configure the QKD platform to execute the method according to any one of the preceding claims.

13. A QKD platform within a communication network, wherein the QKD platform comprises at least:

   - at least one key store (202) as quantum key aggregating interim storage,
   - at least two adjacent communication sites (A, B, X, Y, Z), each communication site (A, B, X, Y, Z) comprising at least one QKD system instance and a local key management system, LKMS, (203), each QKD system instance having a counterpart at another adjacent communication site (A, B, X, Y, Z) of the at least two adjacent communication sites (A, B, X, Y, Z), thus forming a QKD system (201) which is configured to generate quantum keys for a communication between the respective two adjacent communication sites (A, B, X, Y, Z) and to store the generated quantum keys in a key store of the at least one key store (202) that is assigned to and shared by the respective two adjacent communication sites (A, B, X, Y, Z) wherein the at least one key store (202) is part of an abstract intermediate level (102) between a QKD level (101) with QKD systems of respective communication sites and an administrative level (103) formed by local key management systems, LKMS, of respective communication sites, and is accessible by respective LKMS of the two adjacent communication sites quasi simultaneously,
   - a hierarchical QKD controller (204), and
   - at least one computing device,

wherein the at least one computing device is in an operative connection with the at least one key store (202) and the at least two adjacent communication sites (A, B, X, Y, Z) and is designed to configure the QKD platform to execute the method according to any one of claims 1 to 11.

14. A hierarchical QKD controller (204) for a QKD platform according to claim 12 or 13, the hierarchical QKD controller having an overview of all requests for a quantum key within the communication network and being configured for determining weights, particularly in the form of percentage values, by which quantum keys are statically distributed between two possible communication directions and allocated to respective corresponding communication sites (A, B, X, Y, Z) accordingly within the communication network, and adjusting the weights to a current or prospective need of respective quantum keys for a respective communication direction.

15. A computer program product for operating a QKD platform of a communication network, comprising a storage medium storing a program code, the program code causing the QKD platform to carry out a method according to any one of claims 1 to 11 when being executed by at least one computing device which is in operative connection with the QKD platform.

**Patentansprüche**

1. Verfahren zur Bereitstellung und Zuweisung eines Quantenschlüssels als Transportschlüssel an eine von zwei benachbarten Kommunikationsstellen (A, B, X, Y, Z), die eine Kommunikationsverbindung innerhalb eines Kommunikationsnetzwerks bilden und Zwischen-Quantenknoten zwischen einer ersten Endgeräte-Kommunikationsstelle und einer zweiten Endgeräte-Kommunikationsstelle sind, wobei der Transportschlüssel als One-Time-Pad, OTP, verwendet wird, um einen Anwendungsschlüssel in verschlüsselter Form von der ersten Endgeräte-Kommunikationsstelle zur zweiten Endgeräte-Kommunikationsstelle zu übertragen, wobei mindestens ein Schlüsselspeicher (202) als Quantenschlüsselaggregierender Zwischenspeicher verwendet wird, der von den beiden benachbarten Kommunikationsstellen gemeinsam genutzt wird, wobei der mindestens eine Schlüsselspeicher (202) Teil einer abstrakten Zwischenebene (102) ist zwischen einer QKD-Ebene (101) mit QKD-Systemen, die Quantenschlüssel erzeugen und die sich an jeweiligen Kommunikationsstellen befinden, und einer Verwaltungsebene (103), die von lokalen Schlüsselverwaltungssystemen, LKMS, jeweiliger Kommunikationsstellen gebildet wird, und von jeweiligen LKMS der beiden benachbarten Kommunikationsstellen quasi gleichzeitig zugänglich ist, wobei jeder in einem jeweiligen Schlüsselspeicher (202) gespeicherte Quantenschlüssel direkt oder indirekt mit einem Kommunikationsrichtungsattribut verknüpft ist, das durch eine in Schlüsselmaterial kodierte Schlüsseleigenschaft realisiert ist und angibt, für welche von zwei möglichen Richtungen einer Kommunikation zwischen den beiden benachbarten Kommunikationsstellen (A, B, X, Y, Z) der jeweilige Quantenschlüssel zu verwenden ist, wodurch der jeweilige Quantenschlüssel eindeutig einer der beiden benachbarten Kommunikationsstellen (A, B, X, Y, Z) zugewiesen wird und von einem jeweiligen LKMS der Kommunikationsstelle immer dann abgerufen werden kann, wenn die Kommunikationsstelle als Absender in einer jeweiligen Kommunikation agiert, so dass der jeweilige Quantenschlüssel nur für die eindeutige, durch das zugewiesene Kommunikationsrichtungsattribut angegebene Kommunikationsrichtung verwendet werden kann, wodurch ein doppelseitiger Zugriff auf dieselben Quantenschlüssel innerhalb eines jeweiligen Schlüsselspeichers zur ungefähr selben Zeit vermieden wird.

2. Verfahren nach Anspruch 1, wobei jedem im Schlüsselspeicher (202) gespeicherten Quantenschlüssel eine jeweilige Schlüssel-ID zugewiesen wird, wobei das Kommunikationsrichtungsattribut in der jeweiligen Schlüssel-ID codiert wird und durch numerisches Auswerten der Schlüssel-ID erhalten wird.

3. Verfahren nach Anspruch 2, wobei alle Quantenschlüssel mit einer geraden Schlüssel-ID jeweils einer der beiden Kommunikationsstellen (A, B, X, Y, Z) und alle Quantenschlüssel mit einer ungeraden Schlüssel-ID jeweils der entsprechenden anderen der beiden Kommunikationsstellen (A, B, X, Y, Z) zugewiesen werden.

4. Verfahren nach einem der Ansprüche 1 bis 3, wobei für jede Kommunikationsrichtung der beiden möglichen Kommunikationsrichtungen ein Schlüsselspeicher (202) vorgesehen ist, in den die Quantenschlüssel, die der jeweiligen Kommunikationsrichtung und damit der entsprechenden, als Sender agierenden Kommunikationsstelle (A, B, X, Y, Z) zuzuweisen sind, nach Import aus einem jeweiligen schlüsselerzeugenden QKD-System (201) gespeichert werden.

5. Verfahren nach einem der Ansprüche 1 bis 4, wobei Gewichte, insbesondere in Form von Prozentwerten, vorgegeben werden, mit denen die Quantenschlüssel statisch zwischen den beiden möglichen Kommunikationsrichtungen verteilt und den jeweils entsprechenden Kommunikationsstellen (A, B, X, Y, Z) entsprechend zugewiesen werden.

6. Verfahren nach Anspruch 5, wobei die Gewichte von einem QKD-Controller (204) bereitgestellt werden, der einen Überblick über alle Anfragen nach einem Quantenschlüssel innerhalb des Kommunikationsnetzes hat und daher die Gewichte an einen aktuellen oder voraussichtlichen Bedarf an jeweiligen Quantenschlüsseln für eine jeweilige Kommunikationsrichtung anpasst.

7. Verfahren nach Anspruch 6, wobei ein maschinelles Lernsystem implementiert ist und von dem QKD-Controller (204) verwendet wird, um den voraussichtlichen Bedarf an jeweiligen Quantenschlüsseln für eine jeweilige Kommunikationsrichtung zu bestimmen, wobei das maschinelle Lernsystem auftretende Anforderungen für einen Quantenschlüssel innerhalb des Kommunikationsnetzes protokolliert und die auftretenden Anforderungen als Trainingsdaten für autonomes Lernen verwendet.

8. Verfahren nach Anspruch 6 oder 7, wobei ein Kontrollmechanismus implementiert und verwendet wird, um zu gewährleisten, dass die Gewichte jeweils stets über einem bestimmten Schwellenwert liegen.

9. Verfahren nach einem der Ansprüche 6 bis 8, wobei ein lokales Schlüsselverwaltungssystem (203), das sich an einer Kommunikationsstelle (A, B, X, Y, Z) befindet, befugt ist, die Gewichte an den aktuellen Bedarf an jeweiligen Quantenschlüsseln für eine jeweilige Kommunikationsrichtung dynamisch anzupassen, in begrenztem Ⓤmfang auch im Widerspruch zu der vom QKD-Controller (204) vorgenommenen Anpassung.

10. Verfahren nach einem der Ansprüche 6 bis 9, wobei das Bestimmen und Anpassen der Gewichte durch den QDK-Controller (204) offline erfolgt, d. h. unabhängig von einer aktuellen Kommunikation zwischen den beiden Kommunikationsstellen (A, B, X, Y, Z).

11. Verfahren nach einem der vorhergehenden Ansprüche, das zum Bereitstellen und Zuweisen eines Übertragungsschlüssels an eine von zwei benachbarten Kommunikationsstellen (A, B, X, Y, Z) innerhalb des Kommunikationsnetzes verwendet wird, wobei der Übertragungsschlüssel nur für die Kommunikation zwischen den beiden benachbarten Kommunikationsstellen (A, B, X, Y, Z) gültig ist und als OTP-Schlüssel für das Verteilen eines End-to-End-Anwendungsschlüssels zwischen den jeweiligen Endgerätstellen verwendet wird.

12. System in operativer Verbindung mit oder integriert in eine QKD-Plattform innerhalb eines Kommunikationsnetzes, wobei das System mindestens eine Rechenvorrichtung umfasst und die QKD-Plattform mindestens Folgendes umfasst:

- mindestens einen Schlüsselspeicher (202) als Quantenschlüsselaggregations-Zwischenspeicher,
- mindestens zwei benachbarte Kommunikationsstellen (A, B, X, Y, Z), wobei jede Kommunikationsstelle (A, B, X, Y, Z) mindestens eine QKD-Systeminstanz und ein lokales Schlüsselverwaltungssystem, LKMS, (203) umfasst, wobei jede QKD-Systeminstanz ein Gegenstück an einer anderen benachbarten Kommunikationsstelle (A, B, X, Y, Z) der mindestens zwei benachbarten Kommunikationsstellen (A, B, X, Y, Z) aufweist, wodurch ein QKD-System gebildet wird, das dazu konfiguriert ist, Quantenschlüssel für eine Kommunikation zwischen den jeweiligen zwei benachbarten Kommunikationsstellen (A, B, X, Y, Z) zu erzeugen und die erzeugten Quantenschlüssel in einem Schlüsselspeicher (202) des mindestens einen Schlüsselspeichers (202) zu speichern, der den jeweiligen zwei benachbarten Kommunikationsstellen (A, B, X, Y, Z) zugewiesen und von diesen gemeinsam genutzt wird, wobei der mindestens eine Schlüsselspeicher (202) Teil ist einer abstrakten Zwischenebene (102) zwischen einer QKD-Ebene (101) mit QKD-Systemen jeweiliger Kommunikationsstellen und einer Verwaltungsebene (103), die von lokalen Schlüsselverwaltungssystemen, LKMS, jeweiliger Kommunikationsstellen gebildet wird und von jeweiligen LKMS der beiden benachbarten Kommunikationsstellen quasi gleichzeitig zugänglich ist und
- einen hierarchischen QKD-Controller (204),

wobei die mindestens eine Rechenvorrichtung des Systems in einer operativen Verbindung mit dem mindestens einen Schlüsselspeicher (202) und den mindestens zwei benachbarten Kommunikationsstellen (A, B, X, Y, Z) steht und dazu ausgelegt ist, die QKD-Plattform für das Durchführen des Verfahrens nach einem der vorangegangenen Ansprüche zu konfigurieren.

13. QKD-Plattform innerhalb eines Kommunikationsnetzes, wobei die QKD-Plattform mindestens Folgendes umfasst:

- mindestens einen Schlüsselspeicher (202) als Quantenschlüsselaggregations-Zwischenspeicher,
- mindestens zwei benachbarte Kommunikationsstellen (A, B, X, Y, Z), wobei jede Kommunikationsstelle (A, B, X, Y, Z) mindestens eine QKD-Systeminstanz und ein lokales Schlüsselverwaltungssystem, LKMS, (203) umfasst, wobei jede QKD-Systeminstanz ein Gegenstück an einer anderen benachbarten Kommunikationsstelle (A, B, X, Y, Z) der mindestens zwei benachbarten Kommunikationsstellen (A, B, X, Y, Z) aufweist, wodurch ein QKD-System (201) gebildet wird, das dazu konfiguriert ist, Quantenschlüssel für eine Kommunikation zwischen den jeweiligen zwei benachbarten Kommunikationsstellen (A, B, X, Y, Z) zu erzeugen und die erzeugten Quantenschlüssel in einem Schlüsselspeicher des mindestens einen Schlüsselspeichers (202) zu speichern, der den jeweiligen zwei benachbarten Kommunikationsstellen (A, B, X, Y, Z) zugewiesen und von diesen gemeinsam genutzt wird, wobei der mindestens eine Schlüsselspeicher (202) Teil ist einer abstrakten Zwischenebene (102) zwischen einer QKD-Ebene (101) mit QKD-Systemen jeweiliger Kommunikationsstellen und einer Verwaltungsebene (103), die von lokalen Schlüsselverwaltungssystemen, LKMS, jeweiliger Kommunikationsstellen gebildet wird und von jeweiligen LKMS der beiden benachbarten Kommunikationsstellen quasi gleichzeitig zugänglich ist,
- einen hierarchischen QKD-Controller (204), und
- mindestens eine Rechenvorrichtung,

wobei die mindestens eine Rechenvorrichtung in einer operativen Verbindung mit dem mindestens einen Schlüsselspeicher (202) und den mindestens zwei benachbarten Kommunikationsstellen (A, B, X, Y, Z) steht und dazu ausgelegt ist, die QKD-Plattform für das Durchführen des Verfahrens nach einem Ansprüche 1 bis 11 zu konfigurieren.

14. Hierarchischer QKD-Controller (204) für eine QKD-Plattform gemäß Anspruch 12 oder 13, wobei der hierarchische QKD-Controller einen Überblick über alle Anfragen nach einem Quantenschlüssel innerhalb des Kommunikationsnetzes hat und dazu konfiguriert ist, Gewichte, insbesondere in Form von Prozentwerten, zu bestimmen, mit denen Quantenschlüssel statisch zwischen zwei möglichen Kommunikationsrichtungen verteilt und jeweiligen entsprechenden Kommunikationsstellen (A, B, X, Y, Z) innerhalb des Kommunikationsnetzes zugewiesen werden, und die Gewichte an einen aktuellen oder voraussichtlichen Bedarf an jeweiligen Quantenschlüsseln für eine jeweilige Kommunikationsrichtung anzupassen.

15. Computerprogrammprodukt zum Betreiben einer QKD-Plattform eines Kommunikationsnetzes, umfassend ein Speichermedium, das einen Programmcode speichert, wobei der Programmcode die QKD-Plattform veranlasst, ein Verfahren gemäß einem der Ansprüche 1 bis 11 auszuführen, wenn er von mindestens einer Rechenvorrichtung ausgeführt wird, die in operativer Verbindung mit der QKD-Plattform steht.

## Revendications

1. Procédé permettant de fournir et d'attribuer une clé quantique servant de clé de transport à l'un de deux sites de communication (A, B, X, Y, Z) adjacents formant une liaison de communication dans un réseau de communication et constituant des nœuds quantiques intermédiaires entre un premier site de communication terminal et un deuxième site de communication terminal, la clé de transport étant utilisée comme clé à usage unique (one-time-pad, OTP) afin de transférer une clé d'application sous la forme cryptée du premier site de communication terminal vers le deuxième site de communication terminal, au moins un magasin de clés (202) servant de stockage intermédiaire agrégateur de clés quantiques et partagé par les deux sites de communication adjacents, le au moins un magasin de clés (202) faisant partie d'un niveau intermédiaire abstrait (102) entre un niveau QKD (101), composé de systèmes QKD générant des clés quantiques et situés sur des sites de communication respectifs, et un niveau administratif (103), formé par des systèmes de gestion de clés locaux (LKMS) des sites de communication respectifs, et étant accessible par les LKMS respectifs des deux sites de communication adjacents de manière presque simultanée, chaque clé quantique stockée dans un magasin de clés (202) respectif étant directement ou indirectement liée à un attribut de direction de communication réalisé par une propriété de clé codée dans un matériau de clé et indiquant pour quelle direction parmi les deux directions possibles d'une communication entre les deux sites de communication (A, B, X, Y, Z) adjacents la clé quantique respective doit être utilisée, de sorte que la clé quantique respective est attribuée sans ambiguïté à l'un des deux sites de communication (A, B, X, Y, Z) adjacents et peut être récupérée par un LKMS respectif dudit site de communication chaque fois que ledit site de communication fait office d'expéditeur dans une communication respective, de sorte que la clé quantique respective ne peut être utilisée que pour la direction de communication unique indiquée par l'attribut de direction de communication attribué, évitant ainsi un accès double aux mêmes clés quantiques dans un magasin de clés respectif à peu près au même moment.

2. Procédé selon la revendication 1, chaque clé quantique stockée dans le magasin de clés (202) recevant un identifiant de clé respectif, l'attribut de direction de communication étant codé dans l'identifiant de clé respectif et obtenu par évaluation numérique de l'identifiant de clé.

3. Procédé selon la revendication 2, toutes les clés quantiques ayant un identifiant de clé pair étant respectivement attribuées à l'un des deux sites de communication (A, B, X, Y, Z) et toutes les clés quantiques ayant un identifiant de clé impair étant respectivement attribuées à l'autre site correspondant parmi les deux sites de communication (A, B, X, Y, Z).

4. Procédé selon l'une des revendications 1 à 3, prévoyant pour chaque direction de communication parmi les deux directions de communication possibles un magasin de clés (202) destiné à stocker, après leur importation à partir d'un système QKD générateur de clés (201) respectif, les clés quantiques qui doivent être attribuées à la direction de communication respective et donc au site de communication (A, B, X, Y, Z) correspondant faisant office d'expéditeur.

5. Procédé selon l'une des revendications 1 à 4, utilisant des pondérations, notamment sous la forme de valeurs en pourcentage, qui permettent de répartir de manière statique les clés quantiques entre les deux directions de communication possibles et de les attribuer en conséquence aux sites de communication (A, B, X, Y, Z) correspondants respectifs.

6. Procédé selon la revendication 5, les pondérations étant fournies par une unité de commande QKD (204) ayant un aperçu de toutes les demandes de clé quantique dans le réseau de communication et ajustant donc les pondérations en fonction d'un besoin actuel ou futur en clés quantiques respectives pour une direction de communication respective.

7. Procédé selon la revendication 6, **caractérisé en ce qu'**un système d'apprentissage automatique est mis en œuvre et utilisé par l'unité de commande QKD (204) afin de déterminer le besoin potentiel en clés quantiques respectives pour une direction de communication respective, le système d'apprentissage automatique enregistrant des demandes de clé quantique dans le réseau de communication et utilisant lesdites demandes comme données d'apprentissage pour un apprentissage autonome.

8. Procédé selon la revendication 6 ou 7, prévoyant la mise en œuvre et l'utilisation d'un mécanisme de contrôle visant à garantir que les pondérations sont toujours supérieures à une valeur seuil donnée, respectivement.

9. Procédé selon l'une des revendications 6 à 8, un système de gestion de clés local (203) situé sur un site de communication (A, B, X, Y, Z) étant autorisé à ajuster dynamiquement les pondérations en fonction des besoins actuels en clés quantiques respectives pour une direction de communication respective ; dans une mesure limitée, même en contradiction avec l'ajustement effectué par l'unité de commande QKD (204).

10. Procédé selon l'une des revendications 6 à 9, la détermination et l'ajustement des pondérations par l'unité de commande QDK (204) étant effectués hors ligne, donc indépendamment d'une communication en cours entre les deux sites de communication (A, B, X, Y, Z).

11. Procédé selon l'une des revendications précédentes, utilisé pour fournir et attribuer une clé de transmission à l'un des deux sites de communication (A, B, X, Y, Z) avoisinant dans le réseau de communication, la clé de transmission n'étant valable que pour la communication entre les deux sites de communication (A, B, X, Y, Z) avoisinant et servant de clé OTP pour distribuer une clé d'application de bout en bout entre les sites terminaux respectifs.

12. Système connecté de manière opérationnelle à une plateforme QKD ou intégré à celle-ci dans un réseau de communication, le système comprenant au moins un dispositif informatique, et la plateforme QKD comprenant au moins :

- au moins un magasin de clés (202) servant de stockage intermédiaire pour l'agrégation de clés quantiques,
- au moins deux sites de communication (A, B, X, Y, Z) adjacents, chaque site de communication (A, B, X, Y, Z) comprenant au moins une instance de système QKD et un système de gestion des clés local (LKMS) (203), chaque instance de système QKD possédant une contrepartie sur un autre site de communication (A, B, X, Y, Z) adjacent parmi les au moins deux sites de communication (A, B, X, Y, Z) adjacents, formant ainsi un système QKD qui est configuré pour générer des clés quantiques pour une communication entre les deux sites de communication (A, B, X, Y, Z) adjacents respectifs et pour stocker les clés quantiques générées dans un magasin de clés (202) parmi les au moins un magasin de clés (202) qui est attribué et partagé par les deux sites de communication (A, B, X, Y, Z) adjacents respectifs, le au moins un magasin de clés (202) faisant partie d'un niveau intermédiaire abstrait (102) entre un niveau QKD (101) composé de systèmes QKD de sites de communication respectifs et un niveau administratif (103) formé par des systèmes de gestion de clés locaux (LKMS) des sites de communication respectifs, et est accessible par les LKMS respectifs des deux sites de communication adjacents de manière presque simultanée et
- une unité de commande QKD (204) hiérarchique,

le au moins un dispositif informatique du système étant en connexion opérationnelle avec le au moins un magasin de clés (202) et les au moins deux sites de communication (A, B, X, Y, Z) adjacents et étant conçu pour configurer la plateforme QKD afin d'exécuter le procédé selon l'une des revendications précédentes.

13. Plateforme QKD dans un réseau de communication, la plateforme QKD comprenant au moins :

- au moins un magasin de clés (202) servant de stockage intermédiaire agrégateur de clés quantiques,
- au moins deux sites de communication (A, B, X, Y, Z) adjacents, chaque site de communication (A, B, X, Y, Z) comprenant au moins une instance de système QKD et un système de gestion de clés local (LKMS) (203), chaque instance de système QKD possédant une contrepartie sur un autre site de communication (A, B, X, Y, Z) adjacent des au moins deux sites de communication (A, B, X, Y, Z) adjacents, formant ainsi un système QKD (201) qui est configuré pour générer des clés quantiques pour une communication entre les deux sites de communication (A, B, X, Y, Z) adjacents respectifs et pour stocker les clés quantiques générées dans un magasin de clés parmi au moins un magasin de clés (202) qui est attribué et partagé par les deux sites de communication (A, B, X, Y, Z) adjacents respectifs, le au moins un magasin de clés (202) faisant partie d'un niveau intermédiaire abstrait (102) entre un niveau QKD (101) composé de systèmes QKD des sites de communication respectifs et un niveau administratif (103) formé par des systèmes de gestion de clés locaux (LKMS) des sites de communication respectifs, et étant accessible par les LKMS respectifs des deux sites de communication adjacents de manière presque simultanée,
- une unité de commande QKD (204) hiérarchique et
- au moins un dispositif informatique,

le au moins un dispositif informatique étant en connexion opérationnelle avec le au moins un magasin de clés (202) et les au moins deux sites de communication (A, B, X, Y, Z) adjacents et étant conçu pour configurer la plateforme QKD afin d'exécuter le procédé selon l'une des revendications 1 à 11.

14. Unité de commande QKD (204) hiérarchique pour une plateforme QKD selon la revendication 12 ou 13, l'unité de commande QKD hiérarchique ayant un aperçu de toutes les demandes de clé quantique dans le réseau de communication et étant configurée pour déterminer des pondérations, notamment sous la forme de valeurs en pourcentage, permettant de répartir de manière statique les clés quantiques entre deux directions de communication possibles et de les attribuer à des sites de communication correspondants respectifs (A, B, X, Y, Z) en conséquence dans le réseau de communication, et pour ajuster les pondérations en fonction d'un besoin actuel ou futur en clés quantiques respectives pour une direction de communication respective.

15. Produit informatique destiné à faire fonctionner une plateforme QKD d'un réseau de communication, comprenant un support de stockage stockant un code de programme, le code de programme amenant la plateforme QKD à exécuter un procédé selon l'une des revendications 1 à 11 lorsqu'il est exécuté par au moins un dispositif informatique qui est en connexion opérationnelle avec la plateforme QKD.

Figure 1

Figure 2

Figure 3

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180062836 A1